(19) Europäisches Patentamt
European Patent Office
Office européen des brevets

(11) **EP 2 141 564 A1**

(12) **EUROPEAN PATENT APPLICATION**

(43) Date of publication:
**06.01.2010 Bulletin 2010/01**

(51) Int Cl.:
**G05B 23/02** (2006.01)

(21) Application number: **09163766.0**

(22) Date of filing: **25.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **30.06.2008 US 165267**

(71) Applicant: Honeywell International Inc.
**Morristown, NJ 07962 (US)**

(72) Inventors:
 • **Shetty, Pradeep**
 **Morristown, NJ 07962-2245 (US)**

 • **Ryali, Srikanth**
 **Morristown, NJ 07962-2245 (US)**
 • **Mylaraswany, Dinkar**
 **Morristown, NJ 07962-2245 (US)**

(74) Representative: **Buckley, Guy Julian**
 **Patent Outsourcing Limited**
 **1 King Street**
 **Bakewell**
 **Derbyshire DE45 1DZ (GB)**

(54) **Systems and methods for engine diagnosis using wavelet transformations**

(57)    A method for performing diagnosis on an engine includes the steps of obtaining data (102) for a plurality of variables pertaining to the engine, transforming the data (104) with respect to each of the plurality of variables using a wavelet transformation, to thereby generate initial coefficients for each of the plurality of variables, and aggregating (110) the initial coefficients for each of the plurality of variables, to thereby generate an aggregate set of coefficients for the plurality of variables.

FIG. 1

**Description**

FIELD OF THE INVENTION

This invention generally relates to diagnostic methods and systems, and more specifically relates to methods and systems for performing engine diagnosis.

BACKGROUND OF THE INVENTION

Modem engines can be exceedingly complex. The complexities of modem engines, such as gas turbine engines used in aircraft systems and/or other vehicle systems, have led to increasing needs for automated diagnosis of such engines. Typical engine diagnostic systems and methods are designed to monitor the engines in an effort to predict the future performance of the engines and detect potential faults. These engine diagnostic systems and methods are typically designed to detect these potential faults such that the potential faults can be addressed before the potential faults lead to failure in the engine.

One type of engine for which diagnostics are of particular importance in aircraft systems is for gas turbine engines in aircraft systems. In aircraft systems, diagnosis of engines can detect potential faults such that they can be addressed before they result in serious engine or system failure and possible in-flight shutdowns, take-off aborts, delays or cancellations.

Some current engine diagnostic techniques have relied upon one or more assumptions regarding available data that is used by such current engine diagnostic techniques. For example, certain engine diagnostic techniques rely on an assumption that the available data conforms to a particular known distribution or format, such as a normal distribution. In addition, certain engine diagnostic techniques rely on an assumption that a certain amount of fault data exists for the particular type of engine. However, in certain circumstances, the available data may not fit a particular known distribution. In addition, in certain situations, fault data for the particular type of engine may be limited.

Also, typical engine diagnostic techniques and systems have failed to account for effects of correlation of the data over time and across variables. Typical engine diagnostic techniques and systems also often do not provide a parsimonious representation of large data sets with a minimal set of wavelet coefficients. Also, typical engine diagnostic techniques and systems often do not provide optimal results in situations in which there is an unavailability of a sufficient number of fault cases represented in a given data set.

Accordingly, it is desirable to provide an improved engine diagnostic method, for example that provides for potentially more accurate diagnosis of the engine, and/or that provides for accurate diagnosis of the engine when the available data pertaining to the engine may not conform to a particular known distribution and/or when fault data for the particular type of engine may be limited. It is also desirable to provide an improved engine diagnostic program product and/or engine diagnostic system, for example that provides for potentially more accurate diagnosis of the engine such as when the engine may not conform to a particular known distribution and/or when fault data for the particular type of engine may be limited. It is further desirable to provide improved engine diagnostic methods, program products, and engine diagnostic systems that address time correlation of data and correlation across variables. It is also desirable to provide improved engine diagnostic methods, program products, and engine diagnostic systems that provide a parsimonious representation of large data sets with a minimal set of wavelet coefficients. In addition, it is desirable to provide improved engine diagnostic methods, program products, and engine diagnostic systems that provide improved results in situations in which there is an unavailability of a sufficient number of fault cases represented in a given data set. Furthermore, other desirable features and characteristics of the present invention will become apparent from the subsequent detailed description of the invention and the appended claims, taken in conjunction with the accompanying drawings and this background of the invention.

BRIEF SUMMARY OF THE INVENTION

In accordance with an exemplary embodiment of the present invention, a method for performing diagnosis on an engine of a vehicle is provided. The method comprises the steps of obtaining data for a plurality of variables pertaining to the engine, transforming the data with respect to each of the plurality of variables using a wavelet transformation, to thereby generate initial coefficients for each of the plurality of variables, and aggregating the initial coefficients for each of the plurality of variables, to thereby generate an aggregate set of coefficients for the plurality of variables.

In accordance with another exemplary embodiment of the present invention, a program product for performing diagnosis on an engine is provided. The program product comprises an engine diagnostic n program and a computer-readable signal bearing media. The engine diagnostic program is configured to at least facilitate obtaining data for a plurality of variables pertaining to the engine, transforming the data with respect to each of the plurality of variables using a wavelet transformation, to thereby generate initial coefficients for each of the plurality of variables, and aggregating the initial coefficients for each of the plurality of variables, to thereby generate an aggregate set of coefficients for the plurality of variables. The computer-readable signal bearing media bears the engine diagnostic program.

In accordance with yet another exemplary embodiment of the present invention, an engine diagnostic system for performing diagnostics on an engine is provided. The engine diagnostic system includes a memory and a processor. The memory is configured to at least facilitate storing data for a plurality of variables pertaining to the engine. The processor is coupled to the memory, and is configured to at least facilitate transforming the data with respect to each of the plurality of variables using a wavelet transformation, to thereby generate initial coefficients for each of the plurality of variables, and aggregating the initial coefficients for each of the plurality of variables, to thereby generate an aggregate set of coefficients for the plurality of variables.

BRIEF DESCRIPTION OF DRAWINGS

The preferred exemplary embodiment of the present invention will hereinafter be described in conjunction with the appended drawings, where like designations denote like elements, and:

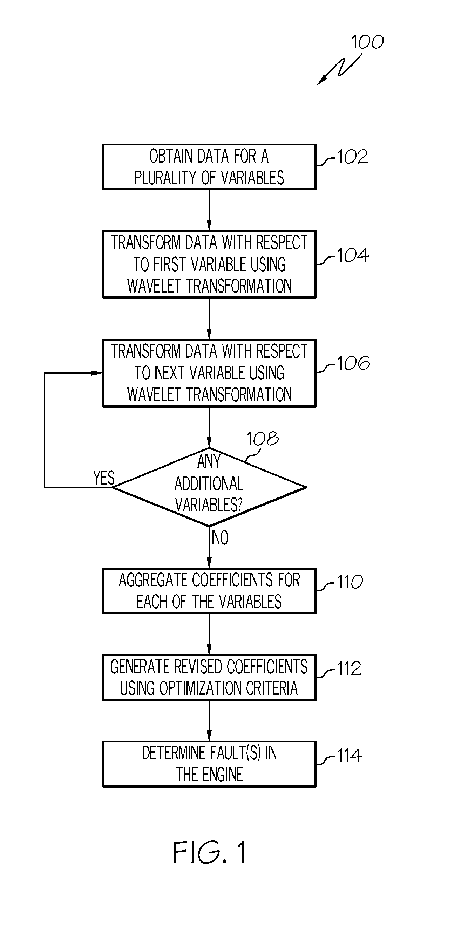

FIG. 1 is a flowchart of a process for performing diagnostics on an engine using wavelet transformations, in accordance with an exemplary embodiment of the present invention;

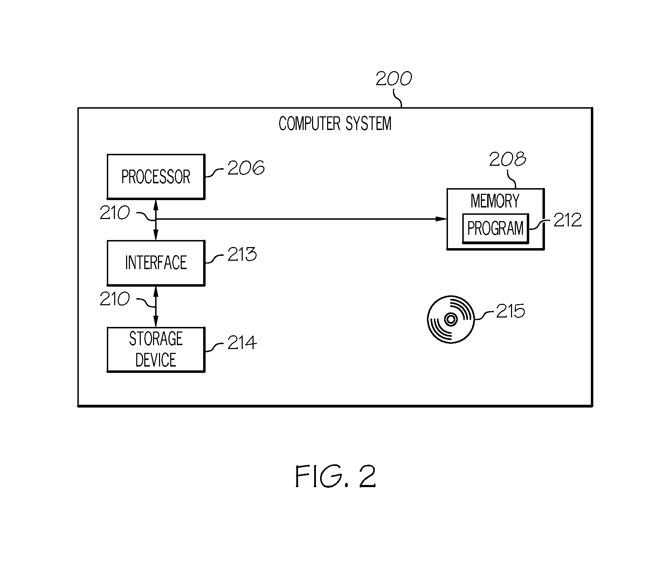

FIG. 2 is a functional block diagram of a computer system for performing diagnostics on an engine using wavelet transformations, and that can be used in implementing the process of FIG. 1, in accordance with an exemplary embodiment of the present invention;

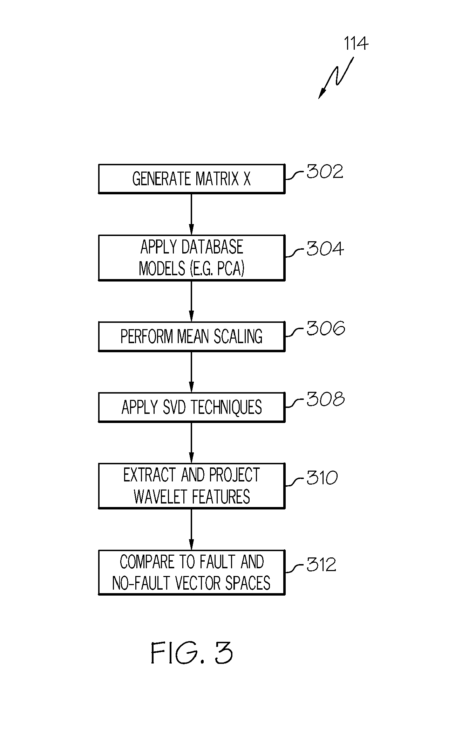

FIG. 3 is a flowchart of a step of the process of FIG. 1, namely the step of determining whether there are one or more faults in the engine, in accordance with one exemplary embodiment of the present invention;

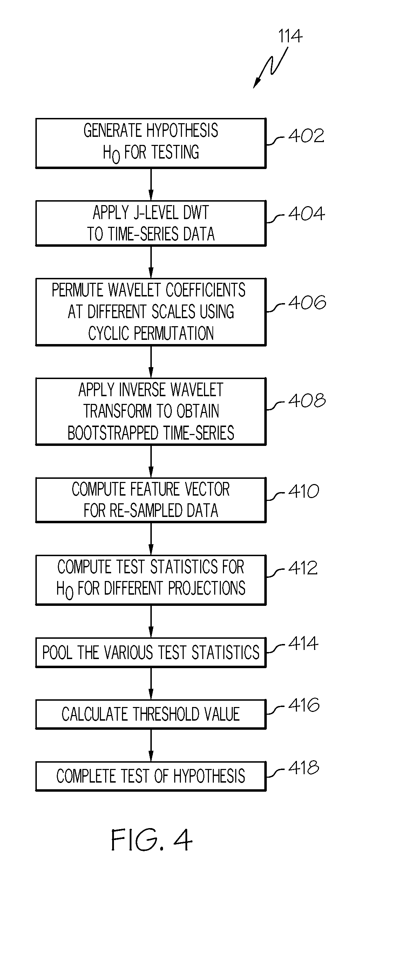

FIG. 4 is a flowchart of a step of the process of FIG. 1, namely the step of determining whether there are one or more faults in the engine, in accordance with another exemplary embodiment of the present invention;

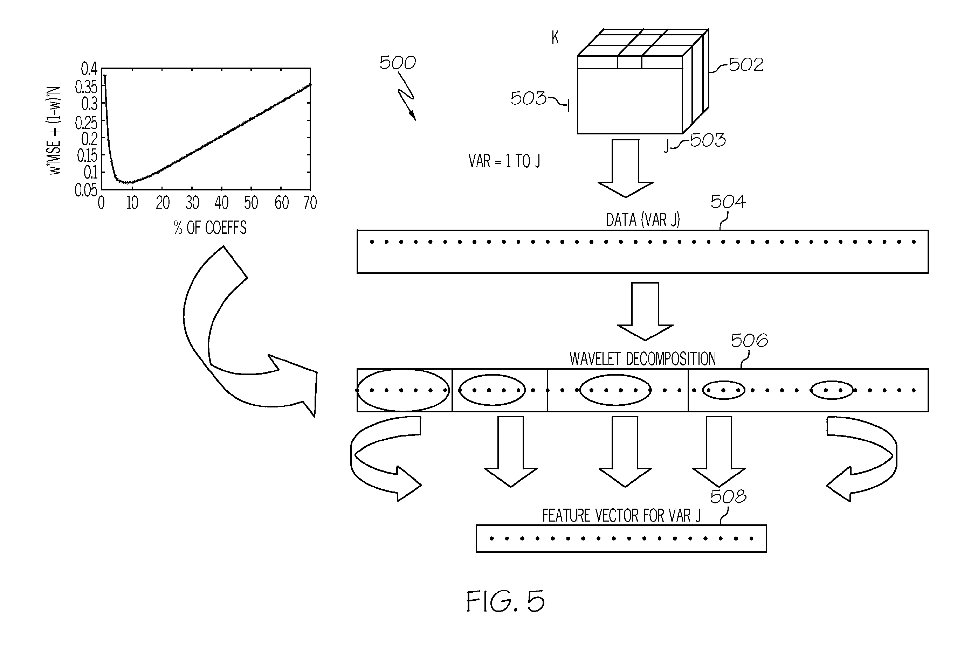

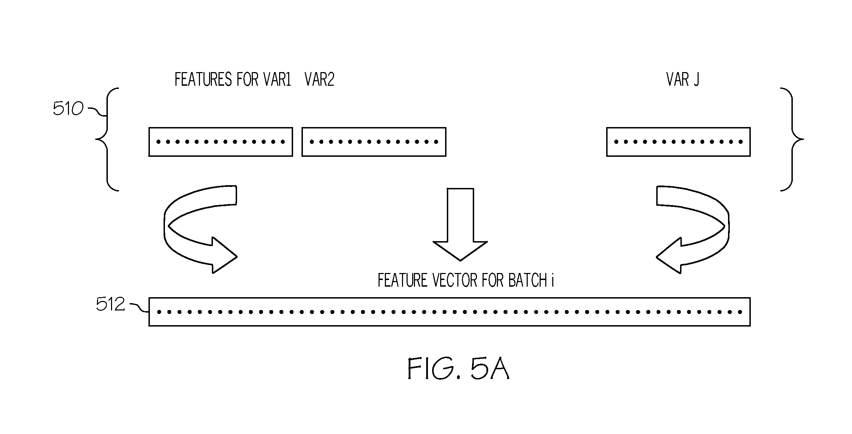

FIG. 5 (including FIG. 5A) is a simplified block diagram showing a structural representation of certain exemplary overall steps OF the process of FIG. 1, in accordance with an exemplary embodiment of the present invention;

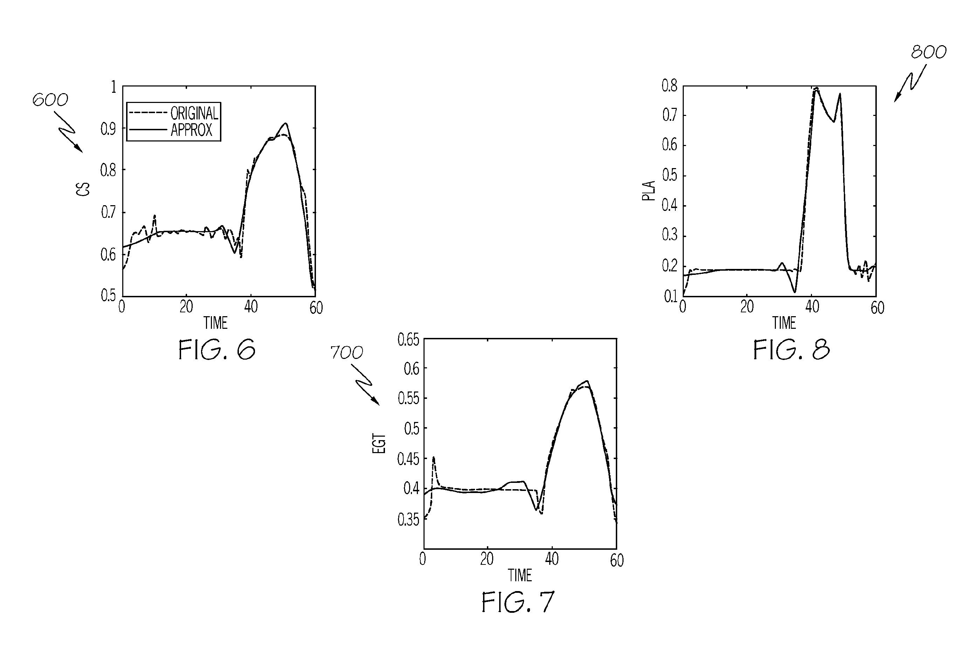

FIG. 6 is a graph showing an exemplary wave approximation for a CS variable implementing the process 100 of FIG. 1 in accordance with an exemplary embodiment of the present invention and representing exemplary data and testing for an exemplary engine, all in accordance with an exemplary embodiment of the present invention;

FIG. 7 is a graph showing another exemplary wave approximation for an engine gas temperature (EGT) variable implementing the process 100 of FIG. 1 in accordance with an exemplary embodiment of the present invention and representing exemplary data and testing for an exemplary engine, all in accordance with an exemplary embodiment of the present invention;

FIG. 8 is a graph showing another exemplary wave approximation for a PLA variable implementing the process 100 of FIG. 1 in accordance with an exemplary embodiment of the present invention and representing exemplary data and testing for an exemplary engine, all in accordance with an exemplary embodiment of the present invention;

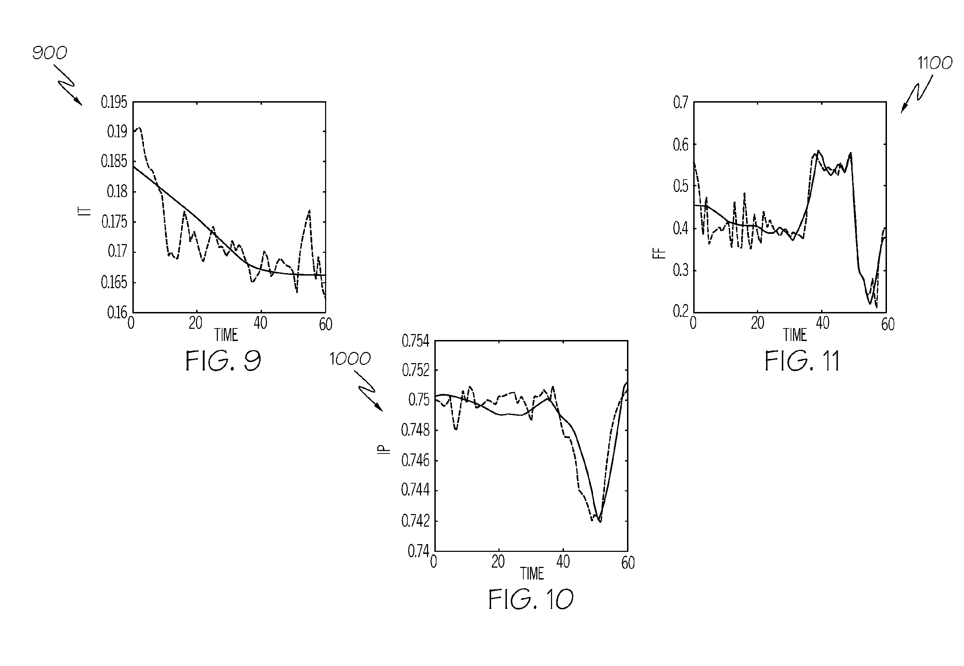

FIG. 9 is a graph showing another exemplary wave approximation for an inlet temperature (IT) variable implementing the process 100 of FIG. 1 in accordance with an exemplary embodiment of the present invention and representing exemplary data and testing for an exemplary engine, all in accordance with an exemplary embodiment of the present invention;

FIG. 10 is a graph showing another exemplary wave approximation for an inlet pressure (IP) variable implementing the process 100 of FIG. 1 in accordance with an exemplary embodiment of the present invention and representing exemplary data and testing for an exemplary engine, all in accordance with an exemplary embodiment of the present invention; and

FIG. 11 is a graph showing another exemplary wave approximation for an FF variable implementing the process 100 of FIG. 1 in accordance with an exemplary embodiment of the present invention and representing exemplary data and testing for an exemplary engine, all in accordance with an exemplary embodiment of the present invention.

DETAILED DESCRIPTION OF THE INVENTION

The following detailed description is merely exemplary in nature and is not intended to limit the invention or the application and uses of the invention. Furthermore, there is no intention to be bound by any theory presented in the preceding background or the following detailed description.

The present invention provides a method, program product, and system for performing diagnostics on an engine using wavelet transformations. In one preferred embodiment, the method, program product, and system are intended for use on gas turbine engines of a fleet of aircraft. However, it will be appreciated that in other embodiments, the method, program product, and system provided can be used for performing diagnostics on or with respect to gas turbine engines for any number of other different types of vehicles, devices, and/or systems, and/or on or with respect to any number of other different types of engines.

FIG. 1 is a flowchart of a process 100 for performing diagnostics on an engine using wavelet transformations, in accordance with an exemplary embodiment of the present invention. In a preferred embodiment, the process 100 is implemented by a computer system that includes a memory and a processor, such as the computer system 200 that includes the processor 206 and the memory 208 of FIG. 2, and that will be described in greater detail further below in connection therewith.

As shown in FIG. 1, the process 100 begins with the step of obtaining data for a plurality of variables pertaining to the engine (step 102). In a preferred embodiment, the variables include an exhaust gas temperature for the engine, power rear angles for the engine, an inlet temperature for the engine, and a veer flow for the engine. However, this may vary in other embodiments, and any number of different types of variables can be represented in the data obtained in step 102. Also in a preferred embodiment, the data is stored in a memory of a computer system, such as the memory 208 of the computer system 200 of FIG. 2. However, this may vary in other embodiments. Also in a preferred embodiment, the data represents time-series data for these variables. In addition, also in a preferred embodiment, the data is retrieved from the memory and utilized by a processor of a computer system, such as the processor 206 of the computer system 200 of FIG. 2, which then performs various steps and manipulation on the data through remaining steps of the process 100 as described in greater detail below. However, this may also vary in other embodiments.

The data is then transformed with respect to a first variable of which the data represents using a wavelet transformation (step 104). The transformation results in an initial coefficient for the first variable that is generated using the wavelet transformation. In a preferred embodiment, the first variable includes one of the following above-referenced variables: an exhaust gas temperature for the engine, power rear angles for the engine, an inlet temperature for the engine, and a veer flow for the engine. However, this may vary in other embodiments. Also in a preferred embodiment, the transformation and generation of the initial coefficients for the first variable is performed by a processor of a computer system, such as the processor 206 of the computer system 200 of FIG. 2. However, this may also vary in other embodiments.

Next data is then transformed with respect to a subsequent, or next, variable of which the data represents using a wavelet transformation (step 106). The transformation results in an initial coefficient for the next variable that is generated using the wavelet transformation. In a preferred embodiment, the next variable transformed in step 106 also includes one of the following above-referenced variables: an exhaust gas temperature for the engine, power rear angles for the engine, an inlet temperature for the engine, and a veer flow for the engine. However, this may vary in other embodiments. Also in a preferred embodiment, the transformation and generation of the initial coefficients for the next variable is performed by a processor of a computer system, such as the processor 206 of the computer system 200 of FIG. 2. However, this may also vary in other embodiments.

A determination is then made as to whether there are any additional variables to be transformed using the wavelet transformation (step 108). In a preferred embodiment, this determination is made by a processor of a computer system, such as the processor 206 of the computer system 200 of FIG. 2. However, this may vary in other embodiments.

If a determination is made in step 106 that there are one or more additional variables to be transformed using the wavelet transformation, then step 106 repeats for another subsequent, or next, variable of which the data represents using a wavelet transformation. In a preferred embodiment, this next variable transformed also includes one of the following above-referenced variables: an exhaust gas temperature for the engine, power rear angles for the engine, an inlet temperature for the engine, and a veer flow for the engine. However, this may vary in other embodiments. Steps 106 and 108 repeat in this manner until a determination is made in an iteration of step 108 that there are no additional variables to be transformed using the wavelet transformation, at which point the process proceeds to step 110, as described below.

In step 110, the initial coefficients are aggregated together (step 110). As a result, an aggregate set of coefficients for the plurality of variables is generated in step 110. In a preferred embodiment, the aggregate set of coefficients for the plurality of variables is generated in step 110 by taking a union of various values represented by the initial coefficients generated in steps 104 - 108 above, for example as described in greater detail further below. Also in a preferred embodiment, the aggregation of the initial coefficients into the aggregate set of coefficients in step 110 is performed by a processor of a computer system, such as the processor 206 of the computer system 200 of FIG. 2. However, this may also vary in other embodiments.

Through steps 104 - 110, data can be represented in different resolutions or scales using wavelets. Such a representation can be referred to as a multi-resolution representation. This representation can be used to approximate a given data set by using information from few important scales. In a preferred embodiment, the initial coefficients for the variables as generated in steps 104 - 110 can serve as an approximation to the data using all of the initial variable coefficients in a coarsest-scale. Increasingly finer levels of resolution can then be introduced in step 112 described below. The approximation error reduces with the inclusion of additional levels through additional refinements in certain embodiments. The discontinuities in the data are manifested even at very finer scales. If these discontinuities are important features of the data, then they are preferably accounted in the approximation, although this increases the number of coefficients required for representing the data. Therefore, the additional refinement in step 112 as described below preserves the important features of the data with as much fewer wavelet coefficients as possible, in accordance with an exemplary embodiment of the present invention.

Specifically, in step 112, a revised set of coefficients for the plurality of variables is generated (step 112). In a preferred embodiment, the revised set of coefficients is generated based on the aggregate set of coefficients from step 110 along with one or more optimization criteria. Also in a preferred embodiment, the revised set of coefficients is generated based on the aggregate set of coefficients and a mean squared error for the data. Preferably, the revised set of coefficients is generated based on the aggregated set of coefficients and a weighted average of a normalized mean squared error for the data. In a most preferred embodiment, the revised set of coefficients for the plurality of variables is generated in step 112 based on the aggregate set of coefficients, the weighted average of the normalized mean squared error for the data, and a measure representing at least in part a number of values in the data. However, this may vary in other embodiments. In addition, in a preferred embodiment, the revised set of coefficients is generated by a processor of a computer system, such as the processor 206 of the computer system 200 of FIG. 2. However, this may also vary in other embodiments.

Preferably, step 112 thus provides for greater refinement of the coefficients, as referenced above. Generally, coarser scales adequately represent low frequency components of the data. The sharp jumps in the data are manifested in coarser to finer scales. Owing to the localized nature of wavelet bases, coefficients within the neighborhood of this discontinuity will be significant and the rest will be insignificant. By retaining these coefficients with significant magnitude and assuming rest of the coefficients to be zero and then applying inverse wavelet transform in accordance with a preferred embodiment of the present invention, this results in potentially better reconstruction compared, for example, to a traditional multi-resolution method. For example, using this technique requires potentially fewer significant wavelet coefficients to represent entire multivariate time-series data, as compared to traditional methods.

In a preferred embodiment, in order to select an optimum number of wavelet coefficients, the following cost following cost function is used, which is referred herein as relative reconstruction error, or RRE. The relative reconstruction error, or RRE, is a weighted average of a normalized mean square error of the data and a fraction of coefficients (preferably the aggregate coefficients of step 110 in a preferred embodiment). In a preferred embodiment, the relative reconstruction error, or RRE, is calculated in accordance with the following equation:

$$\mathrm{RRE(C)} = w \times \mathrm{nMSE} + (1 - w) \times \mathrm{C/N} \ (1) \qquad \text{(Equation 1),}$$

where nMSE is a normalized mean squared error between original and reconstructed data, w is a weight ($0 <= w <= 1$), N is the total number of coefficients and C is the selected number of coefficients. RRE is computed for each C and an optimal value (C*) of the one for which RRE is minimum is determined. Note that, this cost function balances between error in reconstruction and number of coefficients. The following procedure is used in selecting the wavelet bases and is repeated for each variable in the multivariate time-series data.

In a preferred embodiment, in step 112, an L - level wavelet decomposition is applied to each variable time series in the data. Also in a preferred embodiment, for each batch in the data, a number C is selected as representing a number of absolute significant coefficients, and is then used in computing the RRE, as referenced in Equation 1 above. Also in a preferred embodiment, this is repeated for different values of C, and ultimately a value of C is selected that minimizes the values of the RRE. Also in a preferred embodiment, the minimum of all the selected optimum C's is obtained for all the data is the optimum C, referred to herein as C*, for any particular variable.

In addition, in a preferred embodiment, for each batch, various C* absolute significant coefficients are selected, and their corresponding bases are noted, as part of steps 104 - 108 above. Also in a preferred embodiment, a union of all the selected bases is then selected in step 110 above and considered to be the optimum bases set for the time-series data. Preferably the optimum bases set are constructed for each variable in the dataset, for example corresponding to the initial coefficients for each of the variables in steps 104 - 108 described above. The above procedure is conservative in the sense that it selects more number of coefficients than required, but ensures that all the variations in the normal operation is captured and hence all the important features of the data are captured, in accordance with a preferred embodiment of the present invention.

Next, in step 114, a determination is made as to whether there are one or more faults in the engine represented by the data. This fault determination of step 114 is made using the revised coefficients of the plurality of variables from step 112. In one preferred embodiment, the determination of whether there is a fault in the engine is made at least in part by comparing the revised set of coefficients with a fault vector space and a no-fault vector space to determine whether there is a fault in the engine. Also in one preferred embodiment, boundaries of the fault vector space and the no-fault vector space using a set of actual fault data and using a bootstrap technique.

However, this may vary in other embodiments. Also in one preferred embodiment, the determination of whether there is a fault in the engine is based at least in part on the revised set of coefficients and using a bootstrap technique.

However, this may also vary in other embodiments. In addition, in a preferred embodiment, the determination of whether there is a fault in the engine is made by a processor of a computer system, such as the processor 206 of the computer system 200 of FIG. 2, based on a comparison of the revised set of coefficients with a fault vector space and a no fault vector space and/or other information stored in a memory of a computer system, such as the memory 208 of the computer system 200 of FIG. 2. However, this may also vary in other embodiments.

In addition, in a preferred embodiment, the various steps of the process 100 of FIG. 1 are operable under limited training data sets. Also in a preferred embodiment, the various steps of the process 100 of FIG. 1 are further operable to provide optimal representation of the data without losing any necessary information.

FIGS. 3 and 4 depict various sub-steps of step 114 of the process 100 of FIG. 1, namely the step of determining whether or not one or more faults exist in the engine pertaining to the data, according to certain exemplary embodiments of the present invention. However, while FIGS. 3 and 4 depict two such exemplary embodiments, the sub-steps may vary in various other different embodiments.

FIG. 3 is a flowchart of step 114 of the process 100 of FIG. 1, namely the step of determining whether there are one or more faults in the engine, in accordance with one exemplary embodiment of the present invention. In the exemplary embodiment of FIG. 3, the steps 102 - 112 of the process 100 of FIG. 1 and described above are preferably performed with respect to data pertaining to one or more engine faults of interest, and is then compared in step 114 with a known vector space reflecting data or other information pertaining to such one or more faults of interest, and a matrix X is generated, accordingly (step 302). In a preferred embodiment, each row in the matrix X represent these features and the number of rows in X represent the number of multivariate time-series datasets for the fault to be identified.

Then, database models such as principal components analysis (PCA) are preferably applied for finding an associated fault subspace (step 304). For this matrix X, mean scaling is preferably performed (step 306), after which the matrix X is preferably subjected to single value decomposition (SVD) techniques (step 308), preferably given by the following equation:

$$X = U \sum V^{T} \qquad \text{(Equation 2)},$$

where U and V are left and right singular vectors respectively and $\Sigma$ is a diagonal matrix of singular values. The left singular vectors corresponding to significant singular values constitutes the subspace of interest in accordance with a preferred embodiment of the present invention. Also in a preferred embodiment, columns of the matrix signified as P contain the dominant left singular vectors and $\Sigma_a$ is the diagonal matrix of corresponding singular values.

To test any given time-series data, its wavelet features are preferably extracted and projected onto the columns of P (step 310) and compared to various fault and no-fault vector spaces (step 312) representing known instances with representative data in which the engine was known to have certain faults (fault vector spaces) or in which the engine was known to be free of certain faults (no-fault vector spaces). In a preferred embodiment, s is used to represent the projection and test statistics such as $T^2$ and Q, which can be used to check whether a given data is in the subspace or not. $T^2$ and Q are preferably represented by the following equations given by:

$$T^{2}(s) = s^{T}P{\textstyle\sum}_{a}^{-2} s(t) \qquad \text{(Equation 3)},$$

$$Q(s) = r^{T} r, \qquad \text{(Equation 4)},$$

and

$$r = (I - PP^{T}) \qquad \text{(Equation 5)}.$$

In this exemplary embodiment, the $T^2$ statistics is sensitive to inaccuracies in the PCA subspace corresponding to the smaller singular values because it directly measures the variation along each of the principal singular vectors.

However, the Q statistic is robust to smaller singular values since it does not directly measure the variations along each singular vector but measures the total sum of variations in the residual space. It is not sensitive to the inaccuracies in the smaller singular values. The $T^2$ and Q statistics along with their appropriate thresholds can detect different type of faults, and the advantages of both statistics can be utilized by using the two statistics together, in accordance with one exemplary embodiment of the present invention.

It will be appreciated that various steps/sub-steps of the embodiment of FIG. 3 may differ from those depicted in FIG. 3 and/or described herein in connection therewith. It will similarly be appreciated that certain steps/sub-steps of the embodiment of FIG. 3 may occur simultaneously or otherwise in a different order than that depicted in FIG. 3 and/or described herein. In a preferred embodiment, the various steps of the embodiment of Fig. 3 are performed by a processor of a computer system, such as the processor 206 of the computer system 200 of FIG. 2. However, it will similarly be appreciated that this may also vary in other embodiments.

Turning now to FIG. 4, a flowchart is provided for an alternative embodiment of step 114 of the process 100 of FIG. 1, namely the step of determining whether there are one or more faults in the engine, in accordance with another exemplary embodiment of the present invention. In such preferred embodiments, hypothesis testing and bootstrapping techniques are utilized for determining whether there are one or more faults in the engine, for example using the various sub-steps depicted in FIG. 4 and described below in connection therewith. For example, in one preferred embodiment, hypothesis testing is performed to determine whether a given set of revised coefficients belongs to the fault or no-fault vector space. However, this may vary in other embodiments.

In certain such preferred embodiments, the fault identification can also be posed as the following hypothesis testing problem:

$$Ho : T(s) < t \qquad \text{(Equation 6)},$$

and

$$H1 : T(s) > t \qquad \text{(Equation 7)},$$

where Ho is a null hypothesis that the fault is not related to the fault under consideration. In classical hypothesis testing which is based on Neyman-Pearson theorem, the threshold t is obtained by specifying the false alarm rate $\alpha$, which is generally 5% or 1%. If the data is normally distributed, the test statistics T2 and Q follow a chi-square distribution (of appropriate degrees of freedom) in accordance with one preferred embodiment, and the threshold t can be evaluated for a specified alpha ($\alpha$).

For example, in one such exemplary preferred embodiment using hypothesis testing, a wavelet based re-sampling or bootstrapping method to obtain the distribution of T(s) under $H_0$, such as is described directly below. For example, in one such exemplary embodiment of the present invention using a bootstrapping technique, we let x(t,ζ) represent a stochastic process from a probability space. In this embodiment, we also let Ω represent the set of all outcomes of the space, and we let ζ be an element of Ω. In most practical situations, only a finite number of observations or sample paths (or elements ζ ε Ω) from this probability space. Bootstrapping or re-sampling procedures are methods wherein sample paths or observations from the probability space are generated artificially from a given observation x(t, ζ). These observations are in turn preferably used to generate sampling distributions of any statistics (computed from the observations) of interest.

In one preferred embodiment, these methods are based on the assumption of mathematical exchangeability of the elements of the observation x(t). A set of n elements of x(t) is said to be exchangeable if the joint distribution p(x (1), x(2), ..x(n) is invariant under any permutation of these elements. Therefore, several samples paths from a given probability space can be generated by simply permuting the elements of a given observation. However, in many applications the observed time-series has an inherent correlation structure and therefore is not exchangeable. Permuting the elements of the observed time-series destroy its correlation structure.

In order to alleviate this problem, in a preferred embodiment, the following procedure is used to generate the sampling distribution of T(s) under the null hypothesis and an appropriate threshold for a given false positive rate $\alpha$ is computed from this sampling distribution. Specifically, in such a preferred embodiment, for each time-series data under Ho, the following steps are repeated.

First, a hypothesis is generated for testing (step 402). In a preferred embodiment, the hypothesis corresponds to $H_0$ as described above, and corresponds to one or more potential faults and/or the absence of one or more such potential faults in the engine, corresponding to a hypothesis $H_0$ to be tested using the additional steps below in accordance with this embodiment.

Next, a J-level discrete wavelet transform (DWT) is preferably applied to the time series data (step 404). The wavelet coefficients are then preferably permuted at different scales using cyclic permutation (step 406). An inverse wavelet transform is then preferably applied to obtain a re-sampled or bootstrapped time-series (step 408).

In addition, the feature vector is then computed for this re-sampled data (step 410). In so doing, we also preferably let S represent the projection onto the range space of P. A test statistic T(s) is then computed for this projection (step 412). In a preferred embodiment, this is then preferably repeated in various iterations for re-sampled data and different corresponding projections, to thereby calculate various test statistics T(s) for various corresponding projections (step 412).

Next, preferably all of the T(S) values of re-sampled data under $H_0$ are pooled together (step 414). We preferably let $T_v$ represent the vector of T(s) values sorted in ascending order. We also preferably let the total number of elements in $T_v$ be represented by the designation B. Then the value corresponding to $T_v(b((1 - \alpha)B)c)$ provides the required threshold t for the given false positive rate $\alpha$, in accordance with one preferred embodiment of the present invention.

Also in a preferred embodiment, the threshold value t is then calculated according to the above formula (step 416). The threshold value is then preferably used to test the required hypothesis $H_0$ (step 418).

It will be appreciated that various steps/sub-steps of the embodiment of FIG. 4 may differ from those depicted in FIG. 4 and/or described herein in connection therewith. It will similarly be appreciated that certain steps/sub-steps of the embodiment of FIG. 4 may occur simultaneously or otherwise in a different order than that depicted in FIG. 4 and/or described herein. In a preferred embodiment, the various steps of the embodiment of Fig. 4 are performed by a processor of a computer system, such as the processor 206 of the computer system 200 of FIG. 2. However, it will similarly be appreciated that this may also vary in other embodiments.

FIG. 2 is a functional block diagram of a computer system 200 for performing diagnostics on an engine using wavelet transformations, in accordance with an exemplary embodiment of the present invention. As mentioned above, the computer system 200 can be used in implementing the process 100 of FIG. 1 and the various other processes and/or steps depicted in the Figures and/or described herein, in accordance with an exemplary embodiment of the present invention. In addition, program products or software associated with the computer system 200 (for example that includes the program 212 depicted in FIG. 2 and described further below) can also be used to implement the process 100 of FIG. 1 and the various other processes and/or steps depicted in the Figures and/or described herein.

In the depicted embodiment, the computer system 200 includes a processor 206, a memory 208, a computer bus 210, an interface 213 (also as mentioned above), and a storage device 214. The processor 206 performs the computation and control functions of the computer system 200, and may comprise any type of processor or multiple processors, single integrated circuits such as a microprocessor, or any suitable number of integrated circuit devices and/or circuit boards working in cooperation to accomplish the functions of a processing unit. During operation, the processor 206 executes one or more programs 212 preferably stored within the memory 208 and, as such, controls the general operation of the computer system 200.

In a preferred embodiment, the processor 206 executes the steps of the process 100 of FIG. 1. Also in a preferred embodiment, the processor 206 is configured to at least facilitate executing the various steps of the process 100 of FIG. 1 (including the transforming of the data and the aggregating of the initial coefficients, and most preferably the other steps of the process 100 of FIG. 1 as well) while addressing time correlation and correlation across variables in the data.

The memory 208 stores a program or programs 212 that executes one or more embodiments of processes such as the process 100 of FIG. 1 and the various other processes and/or steps depicted in the Figures and/or described herein and/or other processes. The memory 208 can be any type of suitable memory. This would include the various types of dynamic random access memory (DRAM) such as SDRAM, the various types of static RAM (SRAM), and the various types of non-volatile memory (PROM, EPROM, and flash). It should be understood that the memory 208 may be a single type of memory component, or it may be composed of many different types of memory components. In addition, the memory 208 and the processor 206 may be distributed across several different computers that collectively comprise the computer system 200. For example, a portion of the memory 208 may reside on a computer within a particular apparatus or process, and another portion may reside on a remote computer.

The computer bus 210 serves to transmit programs, data, status and other information or signals between the various components of the computer system 200. The computer bus 210 can be any suitable physical or logical means of connecting computer systems and components. This includes, but is not limited to, direct hard-wired connections, fiber optics, infrared and wireless bus technologies.

The interface 213 allows communication to the computer system 200, for example from a system operator and/or another computer system, and can be implemented using any suitable method and apparatus. It can include one or more network interfaces to communicate with the requestor, or with one or more terminal interfaces to communicate with technicians, and/or one or more storage interfaces to connect to storage apparatuses such as the storage device 214, and/or one or more other components of the computer system 200 and/or other systems and/or devices.

The storage device 214 can be any suitable type of storage apparatus, including direct access storage devices such as hard disk drives, flash systems, floppy disk drives and optical disk drives. In one exemplary embodiment, the storage device 214 is a program product from which memory 208 can receive a program 212 that executes one or more embodiments of the process and/or steps thereof as described in greater detail further below. In one preferred embodiment, such a program product can be implemented as part of, inserted into, or otherwise coupled to the computer system 200 and/or one or more components thereof. As shown in FIG. 2, the storage device 214 can comprise a disk drive device that uses disks 215 to store data. As one exemplary implementation, the computer system 200 may also utilize an Internet website, for example for providing or maintaining data or performing operations thereon.

It will be appreciated that while this exemplary embodiment is described in the context of a fully functioning computer system, those skilled in the art will recognize that the mechanisms of the present invention are capable of being distributed as a program product in a variety of forms, and that the present invention applies equally regardless of the particular type of computer-readable signal bearing media used to carry out the distribution. Examples of signal bearing media include: recordable media such as floppy disks, hard drives, memory cards and optical disks (e.g., disk 215), and transmission media such as digital and analog communication links. It will similarly be appreciated that the computer system 200 may also otherwise differ from the embodiment depicted in FIG. 2, for example in that the computer system 200 may be coupled to or may otherwise utilize one or more remote computer systems and/or other control systems.

FIG. 5 (including FIG. 5A) is a simplified block diagram of showing a structural representation 500 of certain exemplary overall steps of the process 100 of FIG. 1, in accordance with an exemplary embodiment of the present invention. As depicted in FIG. 5, data 502 is obtained corresponding to a plurality of variables 503 1 to J, corresponding to step 102 of the process 100 of FIG. 1, namely the step of obtaining data representing the plurality of variables. As shown in FIG. 5, the data 502 preferably represents each of the variables 503 1 to J.

Also as shown in Fig. 5, the data 502 is preferably broken down into various variable-specific data 504, with each variable-specific data 504 corresponding to a different one of the different variables 503. A wavelet decomposition 506 is conducted with respect to each of the variable-specific data 504, resulting in a plurality of feature vectors 508. Preferably, each feature vector 508 pertains to a particular one of the different variables 503. Most preferably, each feature vector 508 includes initial coefficients for a different one of the different variables 503, corresponding to the initial coefficients generated in steps 104-110 of the process 100 of FIG. 1.

Also as shown in FIG. 5, the various feature vectors 508 for the different variables 503 are preferably aggregated together to generated one or more aggregated feature vectors 510. Preferably, the one or more aggregated feature vectors 510 include the aggregate coefficients for the variables generated in step 110 of the process 100 of FIG. 1. The aggregated feature vectors 510 are also preferably used, along with optimization criteria (such as those described above in greater detail in connection with FIG. 1) in generating a one or more revised feature vectors 512. In a preferred embodiment, the one or more revised feature vectors 512 include the revised coefficients generated in step 112 of the process 100 of FIG. 1 and described in greater detail above in connection therewith.

Turning now to FIGS. 6-11, various graphs are provided showing implementations of exemplary wave approximations from the process 100 of FIG. 1, in accordance with an exemplary embodiment of the present invention for different exemplary variables and as applied to an exemplary engine in exemplary testing environments with exemplary data sets. Specifically, in FIG. 6 a graph is provided showing one such exemplary wave approximation 600 for a CS variable implementing the process 100 of FIG. 1 in accordance with an exemplary embodiment of the present invention. FIG. 7 a graph is provided of another exemplary wave approximation 700 for an engine gas temperature (EGT) variable implementing the process 100 of FIG. 1 in accordance with an exemplary embodiment of the present invention. FIG. 8 a graph is provided showing another exemplary wave approximation 800 for a PLA variable implementing the process 100 of FIG. 1 in accordance with an exemplary embodiment of the present invention. FIG. 9 a graph is provided showing another exemplary wave approximation 900 for an inlet temperature (IT) variable implementing the process 100 of FIG. 1 in accordance with an exemplary embodiment of the present invention. FIG. 10 a graph is provided showing another exemplary wave approximation 1000 for an inlet pressure (IP) variable implementing the process 100 of FIG. 1 in accordance with an exemplary embodiment of the present invention. FIG. 11 a graph is provided showing another exemplary wave approximation 1100 for an FF variable implementing the process 100 of FIG. 1 in accordance with an exemplary embodiment of the present invention. As shown in FIGS. 6-11, each of the exemplary wave approximations 600, 700, 800, 900, 1000, and 1100 show potentially accurate results between original variable information and corresponding approximated variable information using the process 100 of FIG. 1.

Accordingly, improved engine diagnostic methods, program products, and engine diagnostic systems are provided. In various exemplary embodiment, the improved engine diagnostic methods, program products, and engine diagnostic systems provide for more accurate diagnosis of the engine, for example when the data pertaining to the engine may not conform to a particular known distribution and/or when fault data for the particular type of engine may be limited. In addition, in various other embodiments, the improved engine diagnostic methods, program products, and systems address time correlation of data and correlation across variables, and provide a parsimonious representation of large data sets with a minimal set of wavelet coefficients, provide improved results in situations in which there is an unavailability of a sufficient number of fault cases represented in a given data set.

The embodiments and examples set forth herein were presented in order to best explain the present invention and its particular application and to thereby enable those skilled in the art to make and use the invention. However, those skilled in the art will recognize that the foregoing description and examples have been presented for the purposes of illustration and example only. The description as set forth is not intended to be exhaustive or to limit the invention to the precise form disclosed. Many modifications and variations are possible in light of the above teaching without departing from the spirit of the forthcoming claims.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

**Claims**

1. A method (100) for performing diagnosis on an engine of a vehicle, the method (100) comprising the steps of:

   obtaining data (502, 504) for a plurality of variables (503) pertaining to the engine (102);
   transforming the data (502, 504) with respect to each of the plurality of variables (503) using a wavelet transformation, to thereby generate initial coefficients for each of the plurality of variables (503) (104); and
   aggregating the initial coefficients for each of the plurality of variables (503), to thereby generate an aggregate set of coefficients for the plurality of variables (503) (110).

2. The method (100) of Claim 1, further comprising the step of:

   generating a revised set of coefficients for the plurality of variables (503), based on the aggregate set of coefficients and a mean squared error for the data (502, 504) (112).

3. The method (100) of Claim 2, wherein the step of generating the revised set of coefficients comprises the step of:

   generating the revised set of coefficients for the plurality of variables (503) based on the aggregate set of coefficients and a weighted average of a normalized mean squared error for the data (502, 504) (110).

4. The method (100) of Claim 2, further comprising the step of:

   comparing the revised set of coefficients with a fault vector space and a no-fault vector space to determine whether there is a fault in the engine (114, 312).

5. A program product (208, 212, 214, 215) comprising:

   an engine diagnostic program (212) configured to at least facilitate:

   obtaining data (502, 504) for a plurality of variables (503) pertaining to the engine;
   transforming the data (502, 504) with respect to each of the plurality of variables (503) using a wavelet transformation, to thereby generate initial coefficients for each of the plurality of variables (503); and
   aggregating the initial coefficients for each of the plurality of variables (503), to thereby generate an aggregate set of coefficients for the plurality of variables (503); and

   a computer-readable signal bearing media (208, 214, 215) bearing the engine diagnostic program (212).

6. The program product (208, 212, 214, 215) of Claim 5, wherein the engine diagnostic program (212) is further configured to at least facilitate generating a revised set of coefficients for the plurality of variables (503), based on a weighted average of a normalized mean squared error for the data (502, 504), and a measure representing at least in part a number of values in the data (502, 504).

7. The program product (208, 212, 214, 215) of Claim 6, wherein the engine diagnostic program (212) is further configured to at least facilitate comparing the revised set of coefficients with a fault vector space and a no-fault vector space to determine whether there is a fault in the engine.

8. An engine diagnostic system (200) comprising:

a memory (208) configured to at least facilitate storing data (502, 504) for a plurality of variables (503) pertaining to the engine; and
a processor (206) coupled to the memory (208) and configured to at least facilitate:

transforming the data (502, 504) with respect to each of the plurality of variables (503) using a wavelet transformation, to thereby generate initial coefficients for each of the plurality of variables (503); and
aggregating the initial coefficients for each of the plurality of variables (503), to thereby generate an aggregate set of coefficients for the plurality of variables (503).

9. The engine diagnostic system (200) of Claim 8, wherein the processor (206) is further configured to at least facilitate generating a revised set of coefficients for the plurality of variables (503), based on a weighted average of a normalized mean squared error for the data (502, 504), and a measure representing at least in part a number of values in the data (502, 504).

10. The engine diagnostic system (200) of Claim 9, wherein the processor (206) is further configured to at least facilitate comparing the revised set of coefficients with a fault vector space and a no-fault vector space to determine whether there is a fault in the engine.

100

OBTAIN DATA FOR A
PLURALITY OF VARIABLES — 102

TRANSFORM DATA WITH RESPECT
TO FIRST VARIABLE USING — 104
WAVELET TRANSFORMATION

TRANSFORM DATA WITH RESPECT
TO NEXT VARIABLE USING — 106
WAVELET TRANSFORMATION

108

YES — ANY
ADDITIONAL
VARIABLES?

NO

AGGREGATE COEFFICIENTS FOR
EACH OF THE VARIABLES — 110

GENERATE REVISED COEFFICIENTS
USING OPTIMIZATION CRITERIA — 112

DETERMINE FAULT(S) IN
THE ENGINE — 114

FIG. 1

FIG. 2

114

GENERATE MATRIX X — 302

APPLY DATABASE
MODELS (E.G. PCA) — 304

PERFORM MEAN SCALING — 306

APPLY SVD TECHNIQUES — 308

EXTRACT AND PROJECT
WAVELET FEATURES — 310

COMPARE TO FAULT AND
NO-FAULT VECTOR SPACES — 312

FIG. 3

114

GENERATE HYPOTHESIS
$H_0$ FOR TESTING — 402

APPLY J-LEVEL DWT
TO TIME-SERIES DATA — 404

PERMUTE WAVELET COEFFICIENTS
AT DIFFERENT SCALES USING
CYCLIC PERMUTATION — 406

APPLY INVERSE WAVELET
TRANSFORM TO OBTAIN
BOOTSTRAPPED TIME-SERIES — 408

COMPUTE FEATURE VECTOR
FOR RE-SAMPLED DATA — 410

COMPUTE TEST STATISTICS FOR
$H_0$ FOR DIFFERENT PROJECTIONS — 412

POOL THE VARIOUS TEST STATISTICS — 414

CALCULATE THRESHOLD VALUE — 416

COMPLETE TEST OF HYPOTHESIS — 418

FIG. 4

FIG.5

FEATURES FOR VAR1  VAR2

VAR J

510

FEATURE VECTOR FOR BATCH i

512

## FIG. 5A

FIG. 6

600

FIG. 7

700

FIG. 8

800

FIG.11

FIG.10

FIG.9

Europäisches
Patentamt

European
Patent Office

Office européen
des brevets

# EUROPEAN SEARCH REPORT

Application Number

EP 09 16 3766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/220782 A1 (COOK DANIEL REED [US]) 4 November 2004 (2004-11-04) * paragraph [0121] * * paragraph [0138] * ----- | 1,5,8 | INV. G05B23/02 |

TECHNICAL FIELDS
SEARCHED      (IPC)

G05B
F02D

The present search report has been drawn up for all claims

| Place of search | Date of completion of the search | Examiner |
|---|---|---|
| The Hague | 27 October 2009 | Kelperis, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 16 3766

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2009

| Patent document cited in search report | Publication date | Patent family member(s) | Publication date |
|---|---|---|---|
| US 2004220782 A1 | 04-11-2004 | NONE | |

For more details about this annex : see Official Journal of the European Patent Office, No. 12/82